# EUROPEAN PATENT APPLICATION

(11) **EP 1 675 011 A1**
(43) Date of publication of application: **28.06.2006**
(21) Application number: 04788372.3
(22) Date of filing: 30.09.2004
(51) Int. Cl.: G06F 12/14, G06F 15/00, G06Q 10/00, H04N 1/387, H04N 7/173

(54) **CONTENT DISTRIBUTION METHOD AND CONTENT SERVER**

(30) Priority: 14.10.2003 JP 2003353691
(71) Applicant: MATSUSHITA ELECTRIC INDUSTRIAL CO., LTD., Kadoma-shi, Osaka 571-8501 (JP)
(72) Inventor: SHEN, Sheng, Mei c/oPanasonic Singapore Lab., Tai Seng Ind. Est., Singapore 534415 (SG); JI, Ming c/oPanasonic Singapore Lab. Pte. Ltd, Tai Seng Ind. Est., Singapore 534415 (SG); HUANG, Zhongyang c/oPanasonic Singapore Lab., Tai Seng Ind. Est., Singapore 534415 (SG); SENOH, Takanori c/oPanasonic Singapore Lab., Tai Seng Ind. Est., Singapore 534415 (SG)
(74) Representative: Eisenführ, Speiser & Partner
(86) International application number: PCT/JP2004/014344
(87) International publication number: WO 2005/036407

(57) **Abstract**

A method for delivering content includes processing the content to protect copyright of the content, deciding use conditions of the content, and describing a first digital item or a second digital item in which the first digital item is defined in a form of Digital Item Declaration, the first digital item containing the content or an address of the content and being able to contain other digital items defined therein. In the describing step, a first description regarding processing the content to protect the copyright of the content and a second description regarding the use conditions are both described in the first digital item.

## Description

### Technical Field

The present invention relates to a method for delivering content and a content server which delivers content. More specifically, the present invention relates to Digital Rights Management (DRM) or Intellectual Property Management and Protection (IPMP) for a generic digital content, especially to' the protection and management of a digital content independent of any data format.

### Background Art

As various kinds of network are widely deployed, it will be demanded that digital content can be delivered and distributed to user via such network besides using CD, DVD. The corresponding issue is raised by content owner. Is it secure to sell their content in this way?

As hard disk or other storage embedded device become more and more, another issue is that how the content protection technique can ensure the entitled rights to be exercised correctly.

As many different digital formats exist to use for packaging content in digital form for easy transmitting over various network, question arises as how the protection technology can be cross-used among different digital formats.

At the same time users have more demands on the convenience with low cost for enjoying content, even sharing with their friends if they purchase such rights, to have rich user experience.

Conflict is always there since content owner cares for any illegal copy so that content providers are trying to protect content in their own proprietary ways due to lacking of the open protection techniques in the market at that time.

This not only brings a big barrier for content owner to sell content, but also brings a heavy cost for CE (consumer electronics) manufacturers to produce different versions of the product just for matching with various protection techniques which content provider use.

MPEG-21 is trying to define a generic framework to enable transparent and augmented use of digital content across a wide range of networks and devices used by different communities. How to protect the contents when they are being used across network or devices, becomes a very important item in MPEG-21, which is the part 4 of MPEG-21, called MPEG-21 IPMP (Intellectual Property Management and Protection).

In the past, people working on MPEG-4/2 IPMP Extension were required to define a content protection scheme based on MPEG-4/2 system since the aim is to protect any content if they are packaged in MPEG-4/2 format.

In MPEG-21, a Digital Item (DI) is defined as a structured digital object for any digital content with a standard representation, identification and description, and it will be used as the fundamental unit of interchange, distribution and transaction within MPEG-21 framework.

The Digital Item is declared and expressed using XML by Digital Item Declaration (DID). Besides a digital content which is represented as media resources in MPEG-21, such as video, music, image, the DID provides the flexible structure to include various kinds of functional metadata. Such metadata is supposed to describe media resource format, to specify resource protection scheme, to give the resource an identification name, to provide User preference, etc.

Besides the core part of DID technology, some other key technologies have also been elaborately developed or are under development. Digital Item Identification (DII), Digital Item Adaptation (DIA), Intellectual Property Management and Protection (IPMP), REL(Rights Expression Language)/RDD (Rights Data Dictionary), as well as ER (Event Reporting) are all the important technologies for extensively exploiting the Digital Items' usage. All the functional metadata defined by these technologies can be placed into a DID document to aid the actual media resource consumption.

In order to prevent copyright infringement such as an illegal copy, a protecting process such as encrypting is performed to digital content. In the DID document, a description related to IPMP (referred to as an "IPMP description", hereinafter) is, for example, related to a protecting process tool with which the protecting process is performed or a protection canceling tool with which the protection is canceled. A terminal on the user side analyzes the IPMP description. The user downloads the necessary protection canceling tool based on the result of the analysis to cancel the protection of the content by using the protection canceling tool, and then performs processes such as a content reproducing process and a content printing process. Since the protecting process tool and the protection canceling tool are paired, even if the protecting process tool is described in the IPMP description, the corresponding protection canceling tool can be downloaded. The protecting process tool is, for example, an encryption tool, an electronic watermark (watermarking) embedding tool, a digital signature tool, or the like. Protection canceling tools corresponding to these protecting process tools are a decryption tool, a detection tool, and a checking tool, respectively. Hereinafter, an "IPMP tool" indicates the protecting process tool or a protection canceling tool.

REL is a language which regulates user's right such as "John can reproduce one piece of music for one month", in other words, a language which regulates use conditions of content. A user terminal analyzes the REL description. The user can perform processes such as a content reproducing process and a content printing process only when the use conditions regulated by the REL description are satisfied.

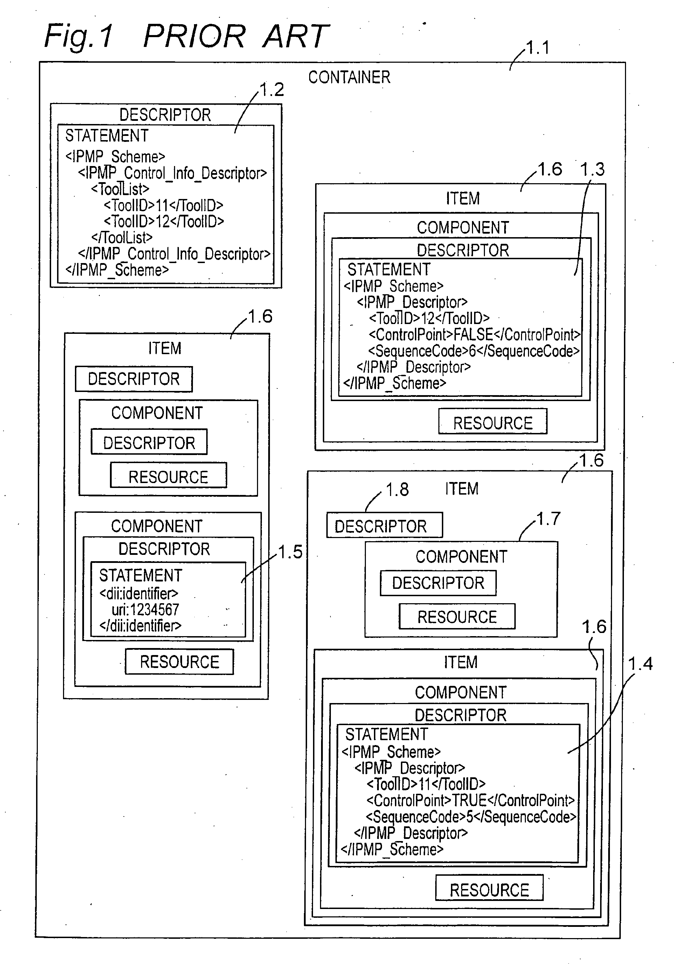

Fig. 1 shows an example of a conventional DID document. As shown in Fig. 1, DID document 1.1 has digital items 1.6 having content or an address of the content as a "resource". As shown in Fig. 1, DID document 1.1 has an IPMP description (1.2). In the IPMP description (1.2), all protection canceling tools necessary for digital items 1.6 are described. The REL description (not shown), which mentions use conditions of the content, is given in a descriptor of the digital item 1.6 having the content or the address of the content.

A content protection and management mechanism is highly requested to address most of the requirements raised by many different application domains, especially in the scope of MPEG-21 domain, to reflect the market needs.

The Related Art are as follows:
1: Inventors: Zhongyang Huang, Ming Ji, Sheng Mei Shen, Takanori Senoh, Takuyo Kogure, and Takafumi Ueno, a patent related to "Apparatus of an MPEG-21 System", internal patent number Pat01.028, filed in Japan on February 2002
2: "ISO/IEC 21000-2 MPEG-21 Digital Item Declaration FDIS", ISO/IEC JTC1 SC29/WG11/N4813, May 2002
3: "MPEG-21 Architecture, Scenarios and IPMP Requirements", ISO/IEC JTC1 SC29/WG11/N5874, July 2003

### Disclosure of the INVENTION

In the conventional DID document, the IPMP description and the REL description related to a specific content is not given together in one digital item having the specific content or the address of the specific content, that is, the IPMP description and the REL description are separately given. When the IPMP description and the REL description are separately given, however, there is a problem of low efficiency and a large time loss in analyzing the descriptions separately, because the IPMP description and the REL description are closely related to each other. For example, when the DID document shown in Fig. 1 is delivered to a user, a user terminal analyzes IPMP description (1.2) first because the DID document is sequentially analyzed from the first description, i.e., in an order named: the upper left, the lower left, the upper right, and the lower right in Fig. 1. In the IPMP description, as described above, all protection canceling tools required for digital items 1.6 are described. The user terminal downloads all the protection canceling tools indicated by the IPMP description (1.2), and then, analyzes the REL description related to the content of each of the digital items 1.6 sequentially. In this case, there is a problem that some protection canceling tools downloaded in advance may be unnecessary depending on the REL descriptions related to the digital items, in this case, time and costs expended to download the unnecessary protection canceling tool are wasted.

Furthermore, it is an object of the present invention to solve the following problems.

The requirements on MPEG-21 IPMP are the problems to be targeted and solved here.

IPMP, especially MPEG-21 IPMP shall support the management and protection of intellectual property in descriptors and description schemes.

IPMP, especially MPEG-21 IPMP shall provide for interoperability so that content is able to be played anywhere.

IPMP, especially MPEG-21 IPMP should enable devices to dynamically discover, request, and obtain upgrades for supporting new media formats, IPMP tools and support.

IPMP, especially MPEG-21 IPMP shall provide mechanisms to reference Digital Item Descriptions as part of the language, make reference to external content descriptions.

IPMP, especially MPEG-21 IPMP shall provide mechanisms to associate Expressions with composite Digital Items.

IPMP, especially MPEG-21 IPMP shall provide mechanisms to reference Containers or other aggregations of Digital Items.

IPMP, especially MPEG-21 IPMP should flag that a particular Expression should be subject to protection. The protection itself (if any) is provided by an IPMP system controlling the Expression as a Digital Item.

IPMP, especially MPEG-21 IPMP shall provide mechanisms to reference authentication schemes.

IPMP, especially MPEG-21 IPMP shall provide mechanisms to ensure that the IPMP is independent of the format or delivery channel of Digital Items.

IPMP, especially MPEG-21 IPMP shall unambiguously articulate requirements relating to IPMP Tool and Features.

IPMP, especially MPEG-21 IPMP shall need to identify IPMP Tools and Features to build trusted IPMP implementations.

IPMP Tools and Features are components parts to build an IPMP-enabled Terminal or Peer. It should also possible for a Terminal or Peer to disclose its IPMP capability (IPMP Tools and Features). This makes it possible for a communicating Terminal or Peer to examine IPMP capability of another Terminal or Peer before deciding to engage with it.

The present invention has been made to solve the above problems and has an object to provide a method for delivering content and a content server which can make it possible for a user to efficiently obtain a protection canceling tool without wasting time to perform reproduction or the like of content.

On the content packaging side:
By introducing the concept of IPMP Control Graph to refer to all the rights and protection information which is directly associated with the content;
By defining IPMP Control Graph or REL-IPMP Control Graph as protection metadata holder to contain rights and protection information which is used to package and protect the content;
By placing rights & condition in the IPMP Control Graph or REL-IPMP Control Graph;
By placing content encryption information in the IPMP Control Graph or REL-IPMP Control Graph;
By placing watermarking information in the IPMP Control Graph or REL-IPMP Control Graph;
By placing rights protection information in the IPMP Control Graph or REL-IPMP Control Graph;
By placing and indicating key information which is used to encrypt content in the IPMP Control Graph or REL-IPMP Control Graph;
By placing key/license information in the IPMP Control Graph or REL-IPMP Control Graph, or in Rights, DID, or somewhere indicated by keyLocation;
By indicating which IPMP Tool is used for encryption, digital signing, watermarking with ToolID in the IPMP Control Graph or REL-EPMP Control Graph;
By associating rights and protection with the protected digital content or its sub content using content ID or DII and sub content ID;
By placing IPMP Control Graph or REL-IPMP Control Graph in DID container or other appropriate place in other application domains;

On the terminal side:
By parsing DID to retrieve content ID or sub content ID, and IPMP Control Graph or REL-IPMP Control Graph;
By parsing IPMP Control Graph or REL-IPMP Control Graph to retrieve Rights and Protection related descriptions;
By invoking IPMP tools which are used to protect the content or rights, or other metadata;
By retrieving key information from KeyData Holder directly of indirectly;
By retrieving a key license from a protected License Manager;
By un-protecting the protected content using the above obtained information;
By checking Rights' integrity using the tool indicated by ToolID;
By parsing the rights and conditions which are embedded with the content;
By retrieving watermarking descriptions and preparing for further action.

A first method for delivering content according to the present invention includes the steps of:
processing the content to protect copyright of the content;
deciding use conditions of the content;
describing a first digital item or a second digital item in which said first digital item is defined in a form of Digital Item Declaration, said first digital item containing the content or an address of the content and being able to contain other digital items defined therein;
packaging said first or second digital item described in the form of Digital Item Declaration; and
delivering said first or second digital item packaged in said packaging step to a user terminal;
wherein, in said describing step, a first description regarding processing the content to protect the copyright of the content and a second description regarding the use conditions are both described in said first digital item.

Preferably, said second description is described followed by said first description in said first digital item, so that said second description is analyzed ahead of said first description by the user terminal.

Preferably, said describing step includes a step of describing a flag which indicates that the copyright of the content is protected, and information of a first protect canceling tool for canceling the protection of the copyright of the content. This method is as referred to a second method for delivering content.

Preferably, in the second method for delivering content, said processing step includes at least one of a step of embedding digital watermarking in the content, a step of encrypting the content, and a step of making digital signature in the content, and
said description step includes a step of describing, based on a type of processing the content to protect the copyright, at least one of a set of a flag which indicates that the digital watermarking is embedded in the content and information of a detection tool for detecting the digital watermarking, a set of a flag which indicates that the content is encrypted and information of a decryption tool for decrypting the content, and a set of a flag which indicates that the digital signature is made in the content and information of a checking tool for checking the digital signature, as said first description. This method is as referred to a third method for delivering content.

Preferably, in the third method for delivering content, said processing step includes a step of encrypting the content with a use of an encryption key, and
said describing step includes a step of describing a flag which indicates that the content is encrypted, the information of a decryption tool for decrypting the content, and information of the encryption key, as said first description. This method is as referred to a fourth method for delivering content.

Preferably, in the fourth method for delivering content, said processing step further includes a step of encrypting the encryption key, and
said describing step further includes a step of describing information of a license key for decrypting the encrypted encryption key. This method is as referred to a fifth method for delivering content.

Preferably, in each of the first to fifth methods for delivering content, further includes the steps of:
processing said second description to protect copyright of said second description;
describing a flag which indicates that the copyright of said second description is protected, and information of a second protect canceling tool for canceling the protection of the copyright of said second description.

A content server according to the present invention includes:
a content processor which processes content to protect copyright of the content;
a use condition generator which generates use conditions of the content;
a describer which describes a first digital item or a second digital item in which the first digital item is defined in a form of Digital Item Declaration, said first digital item containing the content or an address of the content and being able to contain other digital items defined therein;
a packaging unit which packages said first or second digital item described in the form of Digital Item Declaration; and
a deliverer which delivers said first or second digital item packaged by said packaging unit to a user terminal;
wherein said describer describes both of a first description regarding processing the content to protect the copyright of the content and a second description regarding the use conditions in said first digital item.

Preferably, in the first content server, said describer describes a flag which indicates that the copyright of the content is protected, and information of a first protect canceling tool for canceling the protection of the copyright of the content. This content server is referred to as a second content server.

Preferably, in each of the first and second content server, said content processor processes said second description to protect copyright of said second description; and
said describer describes a flag which indicates that the copyright of said second description is protected, and information of a second protect canceling tool for canceling the protection of the copyright of said second description.

According to a content delivering method and a content server of the present invention, in a digital item having content or an address of the content, both an IPMP description and a REL description related to the content are given. In this manner, for every content, a user terminal can analyze the REL description and the IPMP description related to the content. Therefore, a user can obtain only a protection canceling tool necessary for processing the content. When the REL description is given before the IPMP description is given in the digital item, the user terminal analyzes the REL description prior to the IPMP description. For this reason, only a protection canceling tool necessary for the REL description can be obtained. As a result, the user can efficiently obtain the protection canceling tool without wasting time to make it possible to perform reproduction or the like of the content.

The invention is very effective when content is required to be protected with rights and conditions, especially such content can be in any data form and could be transmitted via various network.

The invention is effective when such protection is required to associate with the protected content via content ID, especially such protection information is defined as a set of descriptions attached to the protected content using content ID, or DII in MPEG-21;

The invention is effective when such protection is placed in a generic IPMP Control Graph holder or REL-IPMP Control Graph holder, which is clean and convenient for content creation, content distribution, as well as content consumption, and such holder could be carried in DID in MPEG-21 static file format or carried in SDP for RTP transmission.

The invention is effective when each of the protection is indicated by ToolID so that both defined IPMP tool and external IPMP Tool can be used for flexibility, renewalbility and extensibility.

### Brief Description of Drawings

Fig. 1 is a diagram of a DID structure with possible protection information included in a conventional art.
Fig. 2 is a diagram of a MPEG-21 IPMP architecture of the conventional art.
Fig. 3 is a block diagram of a configuration of a content server according to an embodiment 1 of the present invention.
Fig. 4 is an example of a flow chart for explaining a content delivering process performed by a content server 20 shown in Fig. 3.
Fig. 5 is a flow chart of packaging of pieces of content with separate rights and protection.
Fig. 6 is an IPMP control graph for information related to a right and a protection held in DID.
Fig. 7 shows another example of a flow chart of details of a description step shown in Fig. 4.
Fig. 8 is a flow chart of details of step S45 of the flow chart shown in Fig. 7.
Fig. 9 is a flow chart of a terminal process for content to be protected and packaged in relation to IPMP control graph information.
Fig. 10 is a diagram of an IPMP architecture related to a process of the IPMP control graph.
Fig. 11 is a flow chart of packaging of content related to a composite right and a composite protection.
Fig. 12 is an IPMP control graph for information related to a right and a protection held in DID.
Fig. 13 shows another example of the flow chart showing details of the description step shown in Fig. 4.
Fig. 14 is a flow chart of a terminal process for content to be protected and packaged in relation to the REL-IPMP control graph information.
Fig. 15 is a diagram of an IPMP architecture related to a process of the REL-IPMP control graph.
Fig. 16 is a diagram of a layout of rights and protection in the REL-IPMP control graph.

### Best Mode for Carrying out the Invention

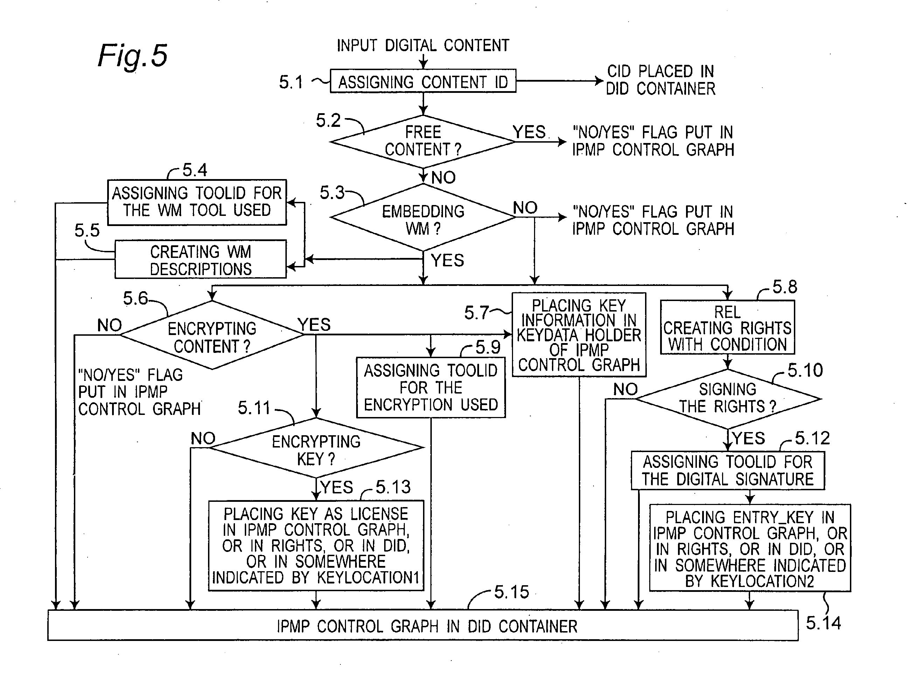

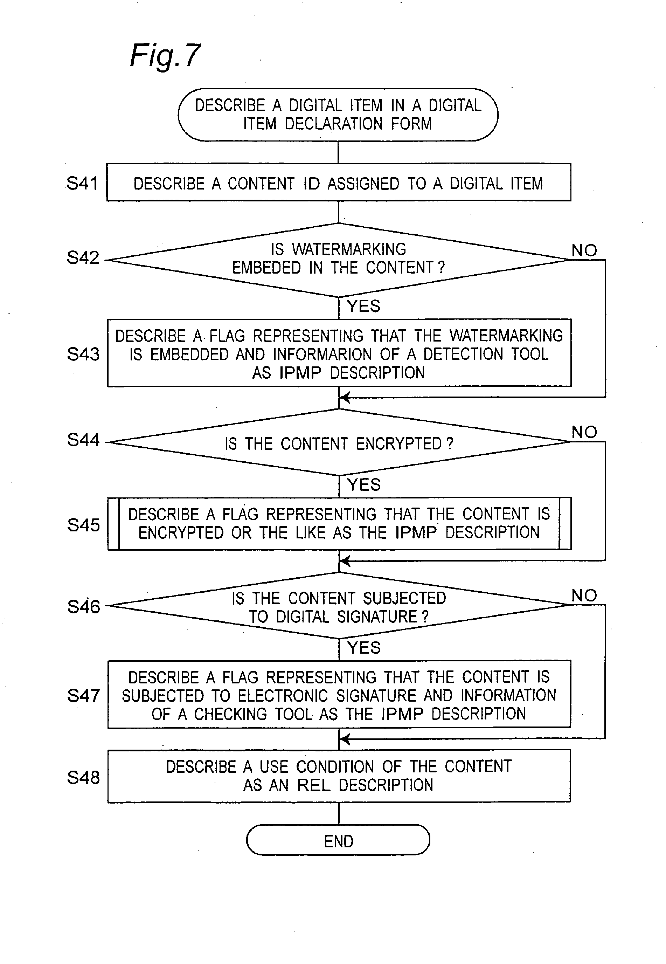

On the content production side as shown in Fig. 5, IPMP Control Graph is generated as shown in Figure 7, to contain all the rights and protection information which is directly associated with the content identified by content Identifier (CID) or DII if MPEG-21 could be used.

The content could be watermarked using certain watermarking tool to achieve certain functions, such as finger printing, persistent association, or copyright protection by embedding CID or other information.

The content can be encrypted by an IPMP tool with ToolIDXXX, where xxx is the number which is registered with RA (Registration Authority), to indicate which encryption algorithm is used. A default tool such as AES is defined for simple hardware to implement. The resulted Key information could be carried in IPMP Control Graph directly or by pointing to a location where the whole Key information data could be found. The encryption key can be further encrypted and finally a license could be generated and directly carried in either IPMP Control Graph, in REL data or other Rights Expression Data, or in DID itself, or in somewhere which can be indicated by KeyLocation indicator to be carried in IPMP Control Graph/REL/DID;

However the segments of key information would also possibly be packaged together with the associated content segments when the protected content is transmitted via network for synchronization purpose.

Rights can be expressed by an independent and existing technology standard such as REL defined in MPEG-21 or other Rights Expression methods, and such rights could be protected by digital signature for its integrity.

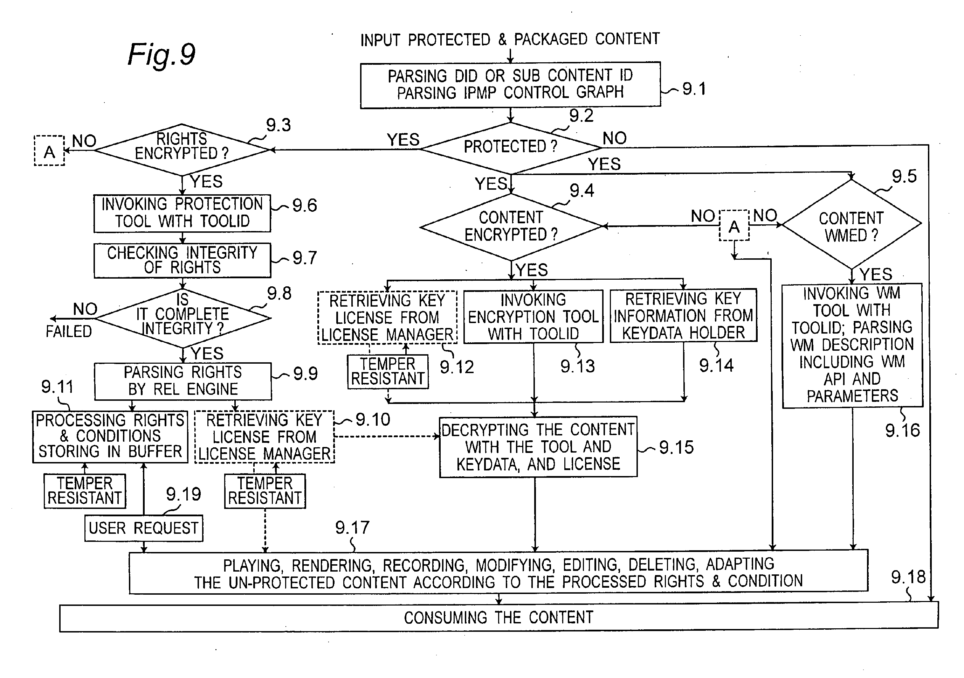

On the content consumption side as shown in Fig. 9, a packaged content with rights and protection information is subjected to IPMP Control Graph parsing, from there it can be known if the content is protected and furthermore to determine whether the content is encrypted, watermarked, or rights is protected as well;

The corresponding protection tools would be invoked and acted on the protected object, the tools can be those normative tools defined by MPEG-21 standard and hence installed in the device, or the tools can be proprietary and identified by tool IDs which can be downloaded from a remote location;

Tool is identified by a registered Tool ID, which is a flag to tell terminal or device to prepare the corresponding tool or locate the tool beforehand;

The key information is retrieved from KeyData Holder defined and carried in IPMP Control Graph directly or indirectly, and it would also possibly be obtained in segment with the corresponding content segment to be protected if the content is distributed through network.

The license information can be obtained from License Manager which could be a temper resistant entity to prevent any disclosure of how a license is retrieved by a license manager.

Rights and content is un-protected by using the above key, key data, and protection tool. Rights is further parsed by Rights Parser to obtain the rights and conditions in clear form, so that the rights and conditions processing can be conducted.

Therefore the un-protected content can be played back, rendered, modified, deleted, or adapted if there is such rights entitled for the user.

As shown in Fig. 1 for the prior art [see reference 1 and 2], a digital content is packaged by DID with possible protection associated.

The DID has defined a useful model (unit 1.1 in Figure 1) formed by a set of abstract terms and concepts such as Container, Item, Component, Anchor, Descriptor, Condition, Choice, Selection, Annotation, Assertion, Resource, Fragment, Statement, etc (e.g. shown in Figure 1 unit 1.6, 1.7, 1.8) for defining Digital Items.

Module 1.2 shown in Figure 1 is the overall IPMP Control Information used for all the items to be protected inside this container. Module 1.3 and 1.4 are the specific protection information which is associated to the protected content. Module 1.5 is the DII to indicate the content ID.

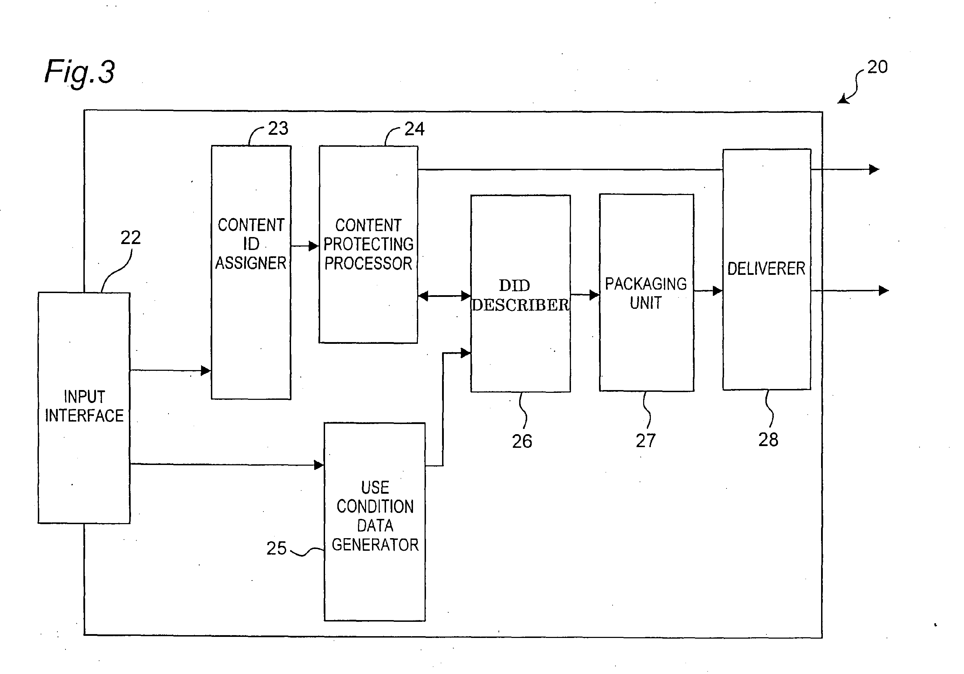

The further improvements over the Prior Art are:
Since DID is to address static relation among each elements and it can be treated as file format, rights and protection information can be directly associated to its protected content as IPMP_Control_Graph, shown in Figure 3.

On the other hand, key information can be carried from KeyData Holder in IPMP_Control_Graph directly or indirectly. It could also be segmented when the content is delivered via network.

Rights which might be encrypted is carried separately or together with protection information.

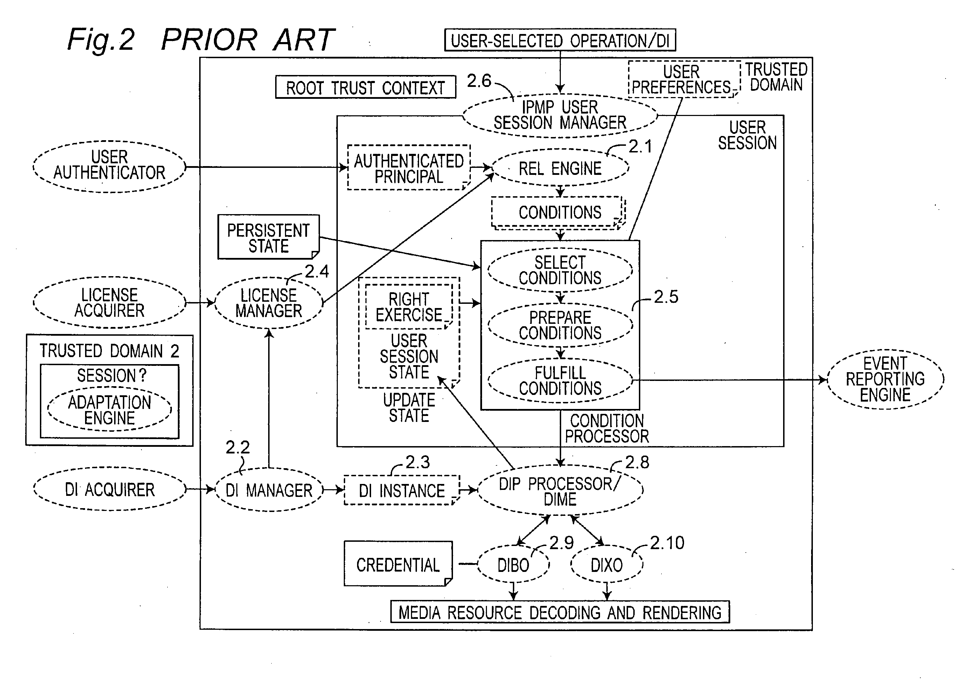

Another Prior Art is shown in Figure 2 [see reference 3] for MPEG-21 IPMP Architecture.

The Rights Expression Language (REL) Engine in module 2.1 is the component that determines REL authorizations, given an authorization request and a set of licenses and root grants. The REL Engine uses the License Manager to help resolve authorization queries.

The Digital Item Manager in module 2.2 parses Digital Item Declarations within Digital Items. The Digital Item Manager also provides access to where the Digital Items are, and creates Digital Item iNstances in module 2.3. The Digital Item Manager passes to the License Manager any Licenses that are embedded within Digital Item Declarations.

The Digital Item iNstance in module 2.3 represents a Digital Item within a Trusted Domain. The Digital Item iNstance contains local metadata about the Digital Item, such as storage location and possibly information about content encryption keys.

The License Manager in module 2.4 supports the REL Engine by managing the persistent state of Licenses and their authorization or revocation status. The License Manager is also responsible for verifying the integrity of Licenses.

The Condition Processor in module 2.5 selects, evaluates and fulfills Conditions, and initiates the execution of authorized Operations (via the DIP Processor, generating a Right Exercise) once conditions are satisfied.

The IPMP User Session Manager in module 2.6 orchestrates the invocation of Digital Item Operations (via the Condition Evaluator), first making sure that proper authorization is obtained (via the REL Engine) and that conditions are evaluated (via the Condition Evaluator).

A Right Exercise in module 2.7 is a record of having exercised a right, i.e., the invocation of a Digital Item Operation. It is maintained by the User Session Manager, and is used to associate the fulfillment of Conditions with the exercise of Rights.

The Digital Item Processing Engine in module 2.8 executes Digital Item Operations, including Digital Item Methods (DIMs), Digital Item Basic Operations (DIBOs) in module 2.9, and Digital Item extended Operations (DIXOs) in module 2.10. The DIMs are executed by a DIM Engine, the DIXOs by a DIXO Engine, and the DIBOs by a DIBO. Library. The Digital Item Processing Engine updates the User Session State with process state information.

The big issue with Figure 2 is that there is no protection information to be processed, interpreted and transferred, especially when content is protected by several tools and rights is also protected using different tools. There is no clear picture for people to know how the content is protected and how it should be processed.

The second issue with Figure 2 is that the data flow from License Manager should not go to REL Engine since the existing REL engine defined in MPEG-21 REL only processes rights expression. The output from license manager could contain the encryption key which is used to decrypt the content controlled by an entity which should be IPMP Manager shown in Fig. 9. The decryption itself can be done in IPMP Tools, DIP Processor, DIME, or DIBO, or DIXO.

The third issue with Figure 2 is that there is no data flow indication to indicate where those REL data comes from, for REL Engine to process. Such Rights Expression including rights conditions if they are expressed in MPEG-21 REL format, they could be carried as metadata together with DI in a DID container, and processed by DI Manager. DI Manager should be changed into DID Parser which only parses information by following what DID is defined.

The better rights and protection is designed based on the two cases. The first case is where the existing REL is employed for expressing the corresponding rights and conditions and a protection control mechanism is defined to take care of content protection including encryption, watermarking, key management. The second case is where the existing REL is extended by adding protection function which could include encryption, watermarking, key management, etc.

Both cases are elaborated in the following sections. Embodiment 1.

### (Content Packaging and Consumption with Separate Right and Protection)

Fig. 3 is a block diagram of a configuration example of a content server according to an embodiment 1 of the present invention. As shown in Fig. 3, a content server 20 according to the embodiment 1 includes an input interface 22, a content ID assigner 23, a content protecting processor 24, a use condition data generator 25, a DID describer 26, a packaging unit 27, and a deliverer 28. The input interface 22 interfaces the content server 20 with an external apparatus, and receives digital content from the external apparatus through the input interface 22. The content ID assigner 23 assigns a content ID for specifying content to the received content. The content protecting processor 24 performs a protecting process such as encrypting or embedding of a watermarking for the content to which the content ID is assigned to protect a copyright of the content. This protecting process is performed by using a protecting process tool corresponding to a type of protecting process. The content protecting processor 24 assigns tool IDs to the protecting process tool and a protection canceling tool paired with the protecting process tool, and outputs the protection canceling tool to the external apparatus through the deliverer 28. A user downloads a necessary protection canceling tool from the external apparatus when necessary. As described above, since the protecting process tool and the protection canceling tool are paired with each other, the protection canceling tool can be known on the basis of the tool ID of the protecting process tool. The use condition data generator 25 generates data representing use conditions of the digital content. The data of the use conditions may be directly input by a person delivering the content from an external input device (not shown) to the use condition data generator 25.

The DID describer 26 describes a digital item having content to which an ID is assigned or an address of the content in a form of Digital Item Declaration. The DID describer 26 gives a description related to a use condition of content represented by the use condition data input from the use condition data generator 25 and a description related to a protecting process performed to the content in the digital item. The packaging unit 27 packages the digital items described in the form of Digital Item Declaration. The deliverer 28 delivers the packaged digital items to a user terminal. And, the deliverer 28 externally outputs the protection canceling tool output from the content protecting processor 24. The digital item can be recursively defined, i.e., the digital item can define another digital item in the digital item itself. The DID describer 26 gives a description related to a use condition of the content and a description related to a protecting process of the content in the same digital item as that having the content or the address of the content.

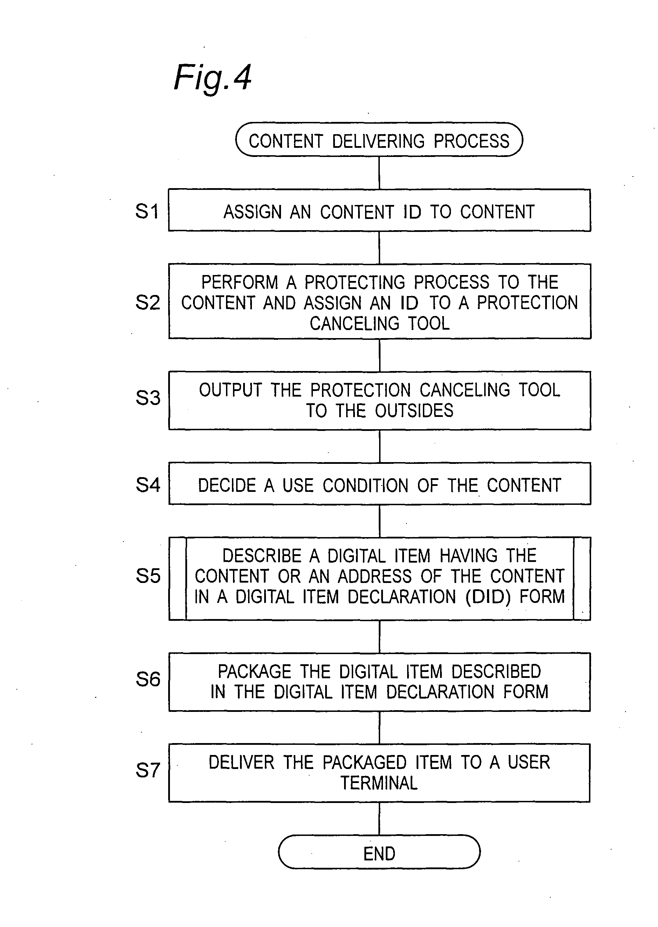

Fig. 4 shows a flow chart of an example of a content delivering process performed by the content server 20 shown in Fig. 3. As shown in Fig. 4, the content server 20 assigns an ID to incoming content by the content ID assigner 23 (step S1). And the content server 20 performs a protecting process to the content for protecting the copyright of the content and assigns an ID to a protection canceling tool for canceling the protection by the content protecting processor 24 (step S2). The content server 20 outputs the protection canceling tool to the external apparatus by the deliverer 28 (step S3). Then, the content server 20 decides a use condition of the content by the use condition data generator 25 (step S4). The content server 20 describes the digital item having the content or the address of the content in a form of Digital Item Declaration by the DID describer 26 (step S5). At this time, information of a protection canceling tool such as the ID of the protection canceling tool and the use condition are described in the digital item. The content server 20 packages the digital item described in the form of Digital Item Declaration by the packaging unit 27 (step S6). Finally, the content server 20 delivers the packaged digital item to a user terminal for the content by the deliverer 28 (step S7).

As in Fig. 5, it is shown on the content packaging side with rights and protection scheme. REL in module 5.8 is the existing rights expression language to be used to package the relevant rights with their conditions. Other parts through 5.3, 5.4, 5.5, 5.6, 5.7, 5.9, 5.11, and 5.13 are the protection related functions. The most important part is in module 5.15, which is the IPMP Control Graph. It can be carried in DID container in MPEG-21, but it also can be carried in other places in different application domains.

When the content is needed to transmit via network, normally it will be segmented, encrypted and stored as Resource somewhere, and the corresponding time-variant key is stored as Key Information in KeyData Holder in IPMP Control Graph in module 5.9 directly or indirectly by pointing to a location.

For example when the protected content is transmitted over RTF, IPMP Control Graph can be carried in SDP (Section Description Protocol), while the key information can be carried in the RTP header or as special case for video and audio packet as long as there has synchronization among time-variant keys and the protected video or audio data.

Module 5.1 is to assign content ID, DII in MPEG-21 could be used here. If necessary sub content ID can be used and the protection can be associated with this sub content ID if the sub content need to be protected. The assignment of content ID is performed by the content assigner 23.

Module 5.2 is to place a flag in IPMP Control Graph to tell if the content is protected or free. Module 5.3 is to place a flag in IPMP Control Graph to indicate if there is watermarking embedded. The place of those flags is performed by the DID describer 26.

If there is watermarking embedded in the content, module 5.4 will assign watermarking (WM) ToolID for the WM tool used for this case, and ToolID is then recorded and placed in IPMP Control Graph. The module 5.5 will create WM Descriptions including watermarking Interface or API related information which is placed in IPMP Control Graph. The assignment of the WM ToolID is performed by the content protecting processor 24. The placement of the WM ToolID in IPMP Control Graph, and the creation of the WM Descriptions are performed by the DID describer 26.

Module 5.6 is to determine if the content will be encrypted, and a flag for "Yes/No" will be placed in IPMP Control Graph in module 5.15. The placement of the flag is performed by the DID describer 26.

Module 5.9 is to assign encryption ToolID for the encryption tool used for this case, and ToolID is then recorded and placed in IPMP Control Graph. The module 5.7 is to place Key information in KeyData Holder directly in IPMP Control Graph, or pointing by the Holder to other location. The assignment of the encryption Tool ID is performed by the content protecting processor 24. The placement of the encryption ToolID in IPMP Control Graph, and the placement of the Key information are performed by the DID describer 26.

The encryption key can be further encrypted in module 5.11, and 5.13, and the key as a license is eventually placed in IPMP Control Graph, REL, DID, or somewhere indicated by KeyLocationl. The encryption of the key is performed by the content protecting processor 24, and the placement of the key as a license is performed by the DID describer 26.

Module 5.8 is to create and package rights with the corresponding conditions which conforms to the existing REL standard, and this part could be modified and edited by distribution agents in the content distribution value chain. The creation of the right is performed by the use condition data generator 25.

The module 5.10 is to protect the rights metadata by digitally signing the rights. Module 5.12 is to assign ToolID for the verification of the digital signature, and module 5.14 is to place the Entity_Key in IPMP Control Graph, or in DID, or in somewhere indicated by KeyLocation2. The assignment of the digital signature of the rights and ToolID for the verification of the digital signature is performed by the content protecting processor 24. The placement of the Entity_Key is performed by the DID describer 26.

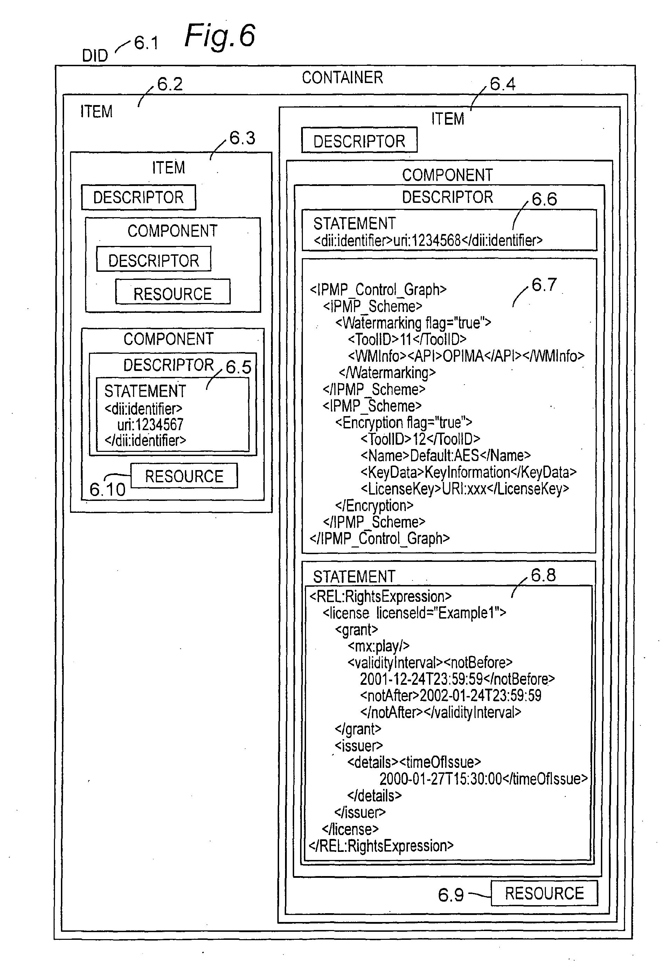

The detail of module 5.15 is shown in Fig. 6 as an example in the case of MPEG-21 where XML based approach is used to express IPMP Control Graph. A DI (6.2, declared by a DID 6.1) consists of two Digital Items (6.3, 6.4), each of which has their identification scheme (6.5, 6.6) with respective attached media resource (6.9, 6.10). Module 6.7 shows the IPMP Control Graph mentioned above and Module 6.8 gives the actual rights expression (conditions and usage rules) linked to the resource.

It will be described in detail about Fig. 6. Fig. 6 shows an example of a digital item described in a DID form. The digital item can be recursively defined, i.e., the digital item can define another digital item in the digital item itself. A digital item 6.2 shown in Fig. 6 includes digital items (6.3 and 6.4). Resources (6.9 and 6.10) of the digital items (6.3 and 6.4) include digital content or an address of a possessor which possesses the digital content. Statements (6.5 and 6.6) are DIIs for designating content IDs. The digital items (6.3 and 6.4) having the content or the address of the content shown in Fig. 6 constitute a first digital item. The digital item 6.2 in which a plurality of first digital items are defined constitutes a second digital item.

As shown in Fig. 6, in the digital item (6.4) having content or an address of the content, both an IPMP description (6.7) and a REL description (6.8) related to the content are given. Table 1 shows the meaning of the IPMP description (6.7). In Table 1, the left column shows actual descriptions, and the right column shows simple meanings of the descriptions.

**[Table 1]**

| | |
|---|---|
| <Watermarking flag = "true"> | Electronic watermarking is embedded. |
| <Tool ID>11</Tool ID> | Tool for detecting watermarking is tool having tool ID of "11". |

| | |
|---|---|
| <WMInfo> <API> OPIMA </API> </WMUInfo> | API (format of arrangement of parameter) related to information written in watermarking is "OPIMA". |
| <Encryption flag = "true"> | Content is encrypted. |
| <Tool ID> 12 <Tool ID> | Tool for decrypting code is tool having tool ID of "12". |
| <Name> Default : AES </Name> | Name of decryption tool is "Default: AES". |
| <Key Data> KelyInfomation </KeyData> | Name of information of encryption key is "KeyInformation". |
| <LicenseKey>URI : xxx <LicenseKey> | License key is arranged at specific position (URI: xxx). |

As shown in Table 1, the "KeyInformation" in the IPMP description is key information of the encryption key used to encrypt the content. The encryption key is encrypted to prevent the encryption key from being abused when content is delivered to a user. The license key is a key to decrypt the code. A position where a license key is arranged is described in the above-mentioned IPMP description.

Table 2 shows the meaning of a REL description (6.8). In Table 2, the left column shows actual descriptions, and the right column shows simple meanings of the descriptions.

**[Table 2]**

| | |
|---|---|
| <grant> | Reproduction of content is permitted in only period from 59" 23:59, December 24, 2001 to 59" 23:59, January 24, 2002. |
| <mx : play/> | |
| <validity Interval><not Before> | |
| 2001-12-24T23:59:59<-not Before> | |
| <not After>2002-01-24T23:59:59 | |
| </not After></validity Interval> | |
| </gtant> | |
| <issuer> | Issue data of right is 15:30, January 27, 2001. |
| <details><time Of Issue>2001-01-27T | |
| 15:30:00</time Of Issue></details> | |
| </issuer> | |

As shown in Fig. 6, since both IPMP description and a REL description related to the content are given in a digital item having content or an address of the content, a user terminal may analyzes only the REL description and the IPMP description related to the content, and the user terminal can acquire only a protection canceling tool required to process the content.

As shown in Fig. 6, when the IPMP description is given prior to the REL description in the digital item, the user terminal analyzes the IPMP description first. In this case, the user terminal downloads the protection canceling tool independently of the contents of the REL description. For example, when the digital item shown in Fig. 6 is received, the user terminal downloads and sets up a necessary tool before a period in which the permitted content is served starts. In this case, when the user terminal reproduce the content after the period starts, the protection canceling tool need not be downloaded, and the content can be immediately reproduced.

Fig. 7 shows another example of a flow chart showing details of a description step (represented by step S5 in Fig. 4) when the digital item shown in Fig. 6 is formed. As shown in Fig. 7, the DID describer 26 of the content server 20 uses data of an ID received from the content ID assigner 23 to describe a content ID assigned to a digital item (step S41). The DID describer 26 uses data received from the content protecting processor 24 to determine whether a watermarking is embedded in the content (step S42). When the DID describer 26 determines that the watermarking is embedded (YES in step S42), it describes a flag representing that the watermarking is embedded and information of a detection tool, e.g., a tool ID of a detection tool as an IPMP description (step S43). When the DID describer 26 determines that the watermarking is not embedded (NO in step S42), the flow shifts to the next step S44. The DID describer 26 uses the data received from the content protecting processor 24 to determine whether the content is encrypted (step S44). When the DID describer 26 determines that the content is encrypted (YES in step S44), it describes a flag or the like representing that the content is encrypted as an IPMP description (step S45). When it determines that the content is not encrypted (NO in step S44), the flow shifts to step S46. The DID describer 26 uses the data received from the content protecting processor 24 to determine whether the content is subjected to digital signature (step S46). When the DID describer determines that the content is subjected to digital signature (YES in step S46), it describes a flag representing that the content is subjected to electronic signature and information of a checking tool, e.g., a tool ID of the checking tool as an IPMP description (step S47). When it determines that the content is not subjected to digital signature (NO in step S46), the flow shifts to the next step S48. Finally, the DID describer 26 uses data received from the use condition data generator 25 to describe a use condition of the content as a REL description (step S48).

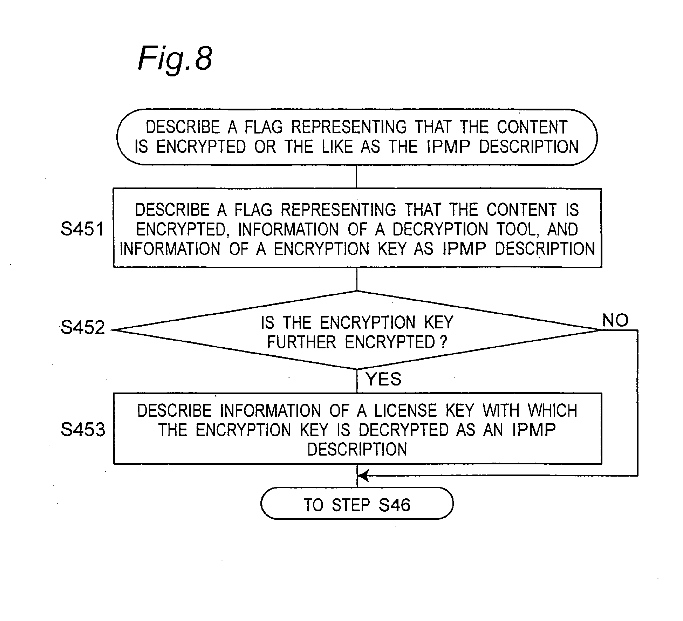

Fig. 8 is a flow chart showing details of step S45 of the flow chart shown in Fig. 7. When the content is encrypted (YES in step S44), the DID describer 26 describes, as an IPMP description, a flag representing that the content is encrypted, information of a decryption tool such as a decryption tool ID, and information of a encryption key (step S452). By using the data received from the content protecting processor 24 again, the DID descrier 26 determines whether the encryption key is further encrypted (step S452). When the DID describer 26 determines that the encryption key is encrypted (YES in step S452), it describes information of a license key with which the encryption key is decrypted as an IPMP description (step S453). When it determines that the encryption key is not encrypted (NO in step S452), the flow shifts to step S46 shown in Fig. 7.

A protecting process may be performed to the REL description (metadata of right). In the case, the DID describer 26 uses the data received from the use condition data generator 25 to form a REL description, and sends the REL description to the content protecting processor 24. The content protecting processor 24 performs a protecting process to the received REL description. At this time, the process performed by the content server 20 is the same as the process performed by it when the protecting process is performed to the content. More specifically, processes shown in steps S2 and S3 in Fig. 4 are performed. Thereafter, the DID describer 26 uses the data received from the content protecting processor 24 to describe a flag corresponding to the type of the protecting process and information of a protection canceling tool in the digital item. The describing process is the same as the process performed by the DID describer 26 when the protecting process is performed to the content. More specifically, the processes in steps S42 to S47 shown in Fig. 7 are performed.

Fig. 9 shows the Terminal Processing Flow Chart to process protection & Packaging Information carried in IPMP Control Graph before a protected content could be consumed in module 9.18.

Module 9.1 is to parse DID and IPMP Control Graph information where DID parser is required only for the case IPMP Control Graph is carried in DID in MPEG-21 case.

In the case of content distribution over RTF network, IPMP Control Graph can be retrieved from SDP to obtain rights and protection description information except the key information if it is time-variant.

Module 9.2 is to detect if the content is protected or free. If it is free, it will be able to play back by module 9.18 for consumption. Otherwise there are three branches to go and check in module 9.3, 9.4, and 9.5, respectively.

Module 9.3 is to detect if the Rights is encrypted, module 9.4 is to detect if the content is encrypted, and module 9.5 is to detect if the content is watermarked.

If the rights is protected, module 9.6 is to invoke the protection tool with ToolID and module 9.7 is to check the integrity of the rights using the tool. If the integrity is successfully verified in module 9.8, the rights will be sent to module 9.9 for parsing the rights by REL Engine which conforms to the existing REL standard.

Module 9.11 is to process the rights and conditions attached to the content and store the entitled rights and conditions in a buffer. In module 9.19 those rights requested by the users are subjected to checking against the rights and conditions stored in the buffer.

If there is license carried in Rights, module 9.10 is to retrieve license from License Manager which may be temper resistant (TR) protected.

If the content is protected and encrypted, module 9.13 is to invoke the encryption tool indicated by ToolID carried in IPMP Control Graph, module 9.14 is to retrieve Key Information, and module 9.12 is to obtaining the key license from License Manager.

License Manager here could be protected by temper resistant technique if it is part of the terminal or somewhere in other places, since it will provide the actual license which the decryption engine will use to un-protect the content.

The encryption tool can be defined as default for most of the terminals to use in their implementation, while an IPMP ToolID is provided so that people can choose other than default encryption tool in their special domain. If the platform is allowed to download and use different encryption tool indicated by ToolID, it would achieve extensibility, flexibility and renewability at the same time we will achieve interoperability across different domains.

Key Information could be retrieved from different places in the case of content delivery via various networks. This will depend on where you place key information. If you place them in RTF header, you can get them there, while if you place them as other packets like video and audio data, you can get them by following the same rules applied to video and audio. The time-variant key information is required to obtain in the same time when you need to decrypt the video and audio content.

Module 9.15 is to decrypt the content with the invoked tool, KeyData, and License, then passed to module 9.17 for further processing.

If the content is detected as watermarked in module 9.5, the watermarking tool with ToolID and its description data including interface will be invoked and prepared in module 9.16 for action which is up to user's request.

Finally module 9.17 is to exercise the rights which user is requested based on the entitled rights & conditions, and act on the un-protected content which is the output of module 9.15.

In Fig. 9 Temper Resistant is used to protect the function of License Manager to provide license, Rights & Condition Processing to prepare the rights, even content decryption for obtaining un-protected content.

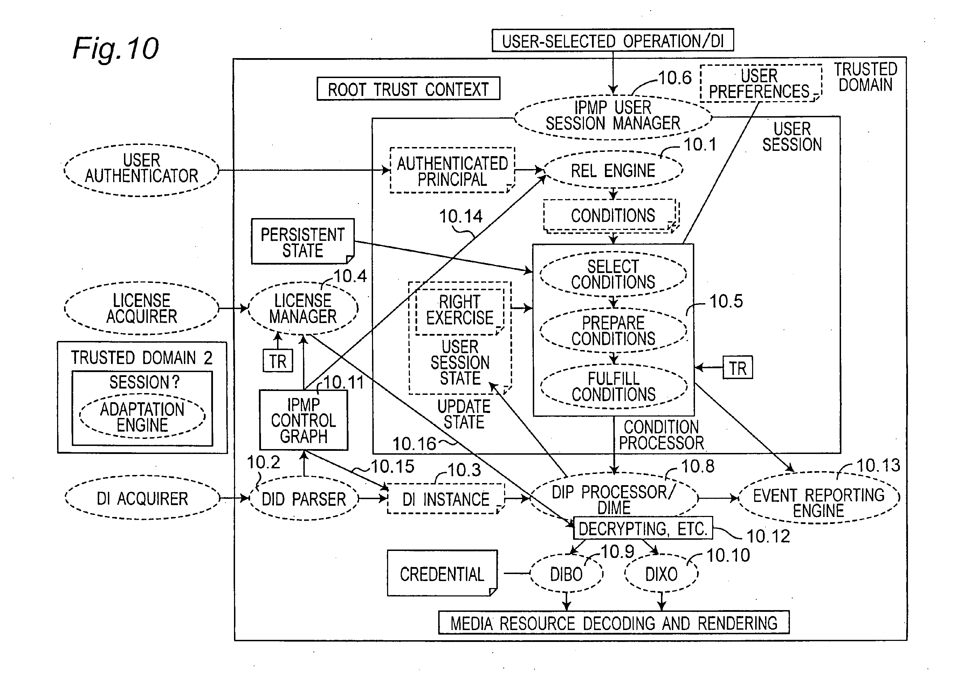

Fig. 10 shows a modified IPMP Architecture with REL and IPMP Control Graph separately processed. Compared to the Rights and Protection (IPMP Related) functions in Fig. 9 and Fig. 10, it is clear that there are many IPMP related functions missing in the prior art of Fig. 2. Only the blocks in Fig. 9 which are the module 9.9 for REL Engine, module 9.10 and 9.12 for License Manager, and module 9.11 for Conditions Processing, are introduced in the prior art as shown in Fig. 2. Such function blocks are module 2.1, module 2.4, and module 2.5 in Fig. 2.

As shown in Fig. 10, Module 10.11 is added for parsing and processing IPMP Control Graph information, and the corresponding results are passed to License Manager in module 10.4, REL related data passed to REL Engine in module 10.1 after its integrity is checked, and content protection and watermarking information passed to DI iNstanace in module 10.3 for further processing.

Decrypting, watermarking, etc. in module 10.12, could be conducted in module 10.8 if such method is defined in DIME, or in module 10.9 if it is defined as one function of DEBO, or in module 10.10 if it is an external function.

The line 10.14 is shown for the data flow from IPMP Control Graph processing module to REL Engine, and the line 10.15 is shown for the data flow from IPMP Control Graph processing module to NI iNstance.

The line 10.16 is shown for the data flow from License Manager to the un-protecting block in the module 10.12 for issuing a license.

Module 10.13 is for Event Reporting Engine which is placed in the same trusted domain compared to that in Fig. 2.

TR means Temper Resistance module to be used to protect License Manager operation and Condition Processing Operation.

Other modules have the similar meaning as explained in Fig. 2.

### Embodiment 2.

### (Content Packaging and Consumption with Mixed Rights and Protection)

A content server according to an embodiment 2 of the present invention has the same configuration and the same operation as those in the content server according to the embodiment 1, and therefore, a description thereof will be omitted.

In this case, there is no clear boundary between rights and protection, and they are mixed. IPMP Control Graph can be considered as REL-IPMP Control Graph.

Based on the current MPEG-21 REL or other rights expression language, protection of content as well as indicating for how to protect the content is not defined. In this case the existing REL has to be extended to support such protection signaling.

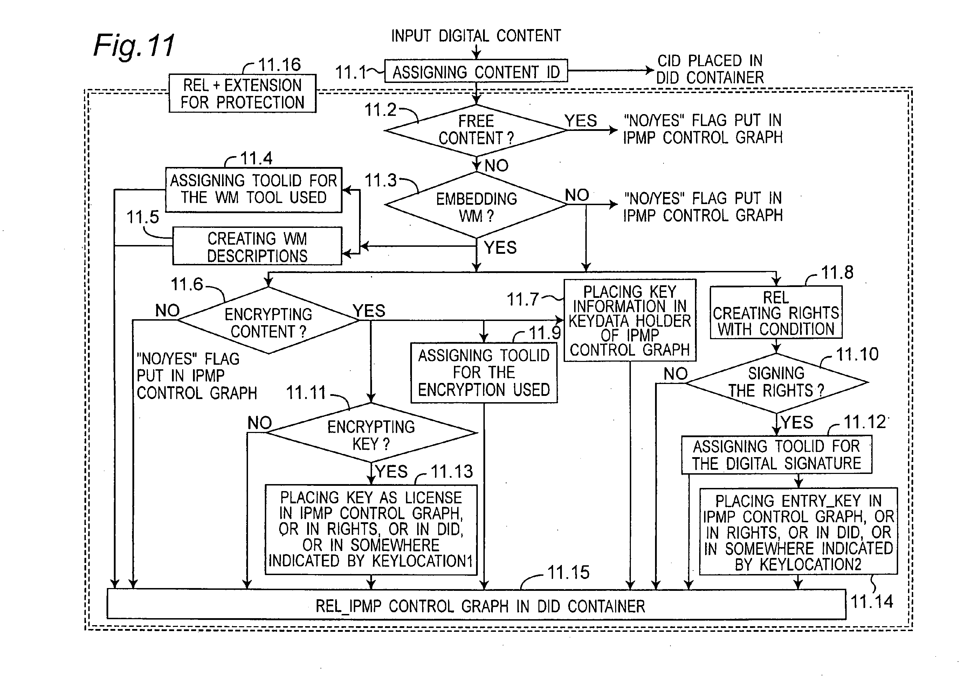

As shown in Fig. 11 which is based on Fig. 5, Module 11.16 is considered as REL + Extension to support content protection signaling by extending the existing REL standard, and module 11.15 is changed into REL-EPMP Control Graph. Module 11.8 is the existing REL function.

Other modules have the same functions as explained above.

As in Fig. 11, it is shown on the content packaging side with rights and protection scheme. REL in module 11.8 is the existing rights expression language to be used to package the relevant rights with their conditions. Other parts through 11.3, 11.4, 11.5, 11.6, 11.7, 11.9, 11.11, and 11.13 are the protection related functions. The most important part is in module 11.15, which is the REL-EPMP Control Graph. It is carried in DID container in MPEG-21, but it also can be carried in other places when it is used in different application domains.

When the content is needed to transmit via network, normally it will be segmented, encrypted and stored as Resource somewhere, and the corresponding time-variant key is stored as Key Information in KeyData Holder in REL-EPMP Control Graph in module 11.9 directly or indirectly by pointing to a location.

For example when the protected content is transmitted over RTP, REL-EPMP Control Graph can be carried in SDP (Section Description Protocol), while the key information can be carried in the RTP header or as special case for video and audio packet as long as they are synchronized among time-variant keys and the protected video or audio data.

Module 11.1 is to assign content ID, DII in MPEG-21 could be used here. Module 11.2 is to place a flag in REL-IPMP Control Graph to tell if the content is protected or free. Module 11.3 is to place a flag in REL-IPMP Control Graph to indicate if there is watermarking embedded.

If there is watermarking embedded in the content, module 11.4 will assign watermarking (WM) ToolID for the WM tool used for this case, and ToolID is then recorded and placed in REL-IPMP Control Graph. The module 11.5 will create WM Descriptions including watermarking Interface or API related information which is placed in REL-IPMP Control Graph.

Module 11.6 is to determine if the content will be encrypted, and a flag for "Yes/No" will be placed in REL-IPMP Control Graph in module 11.15.

Module 11.9 is to assign encryption ToolID for the encryption tool used for this case, and ToolID is then recorded and placed in REL-IPMP Control Graph. The module 11.7 is to place Key information in KeyData Holder directly in REL-IPMP Control Graph, or pointing by the Holder to other location.

The encryption key can be further encrypted in module 11.11, and 11.13, and the key as a license is eventually placed in REL-IPMP Control Graph, REL, DID, or somewhere indicated by KeyLocationl.

Module 11.8 is to create and package rights with the corresponding conditions which conforms to the existing REL standard, and this part could be modified and edited by distribution agents in the content distribution value chain.

The module 11.10 is to protect the rights metadata by digitally signing the rights. Module 11.12 is to assign ToolID for the verification of the digital signature, and module 11.14 is to place the Entity_Key in REL-IPMP Control Graph, or in DID, or in somewhere indicated by KeyLocation2.

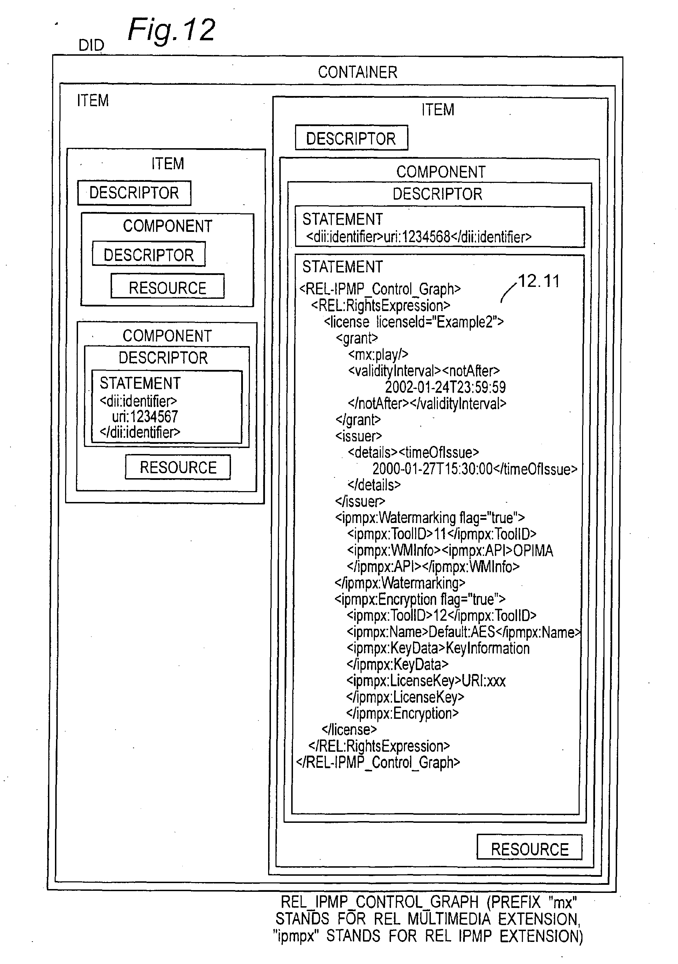

The detail of module 11.15 is shown in Fig. 12 as an example in the case of MPEG- 21 where XML based approach is used to express REL-IPMP Control Graph. The figure is similar to Fig. 6. It uses REL-IPMP Control Graph (12.11) to replace 6.7 and 6.8 modules as shown in Fig. 12 but act as similar function to represent all rights and protection information.

It can be seen from the Fig. 12 that the REL IPMP extension is defined here to contain not only rights expression but also protection descriptions, and such extension is done on the top of the existing MPEG-21 REL or other Rights expression language since they are originally defined just to express rights, conditions, as well as principles and issuers. The ipmpx shown in the XML expression in Fig. 12 is the part of the extension of REL for protection.

Fig. 12 is a diagram of an example of another digital item described in a DID form. The contents of the IPMP description and the REL description (12.11) are the same as those shown in Fig. 6. However, unlike in Fig. 6, the REL description is given first in Fig. 12. This is because the DID describer 26 gives the REL description prior to the IPMP description. In this manner, since the user terminal analyzes the REL description ahead of the IPMP description, before a protection canceling tool is downloaded, it can be known whether content can be reproduced, i.e., whether a period in which reproduction is permitted has already started. Therefore, when the period in which the reproduction is permitted has not started, the protection canceling tool need not be downloaded, and therefore, time and cost expended to download the protection canceling tool can be omitted.

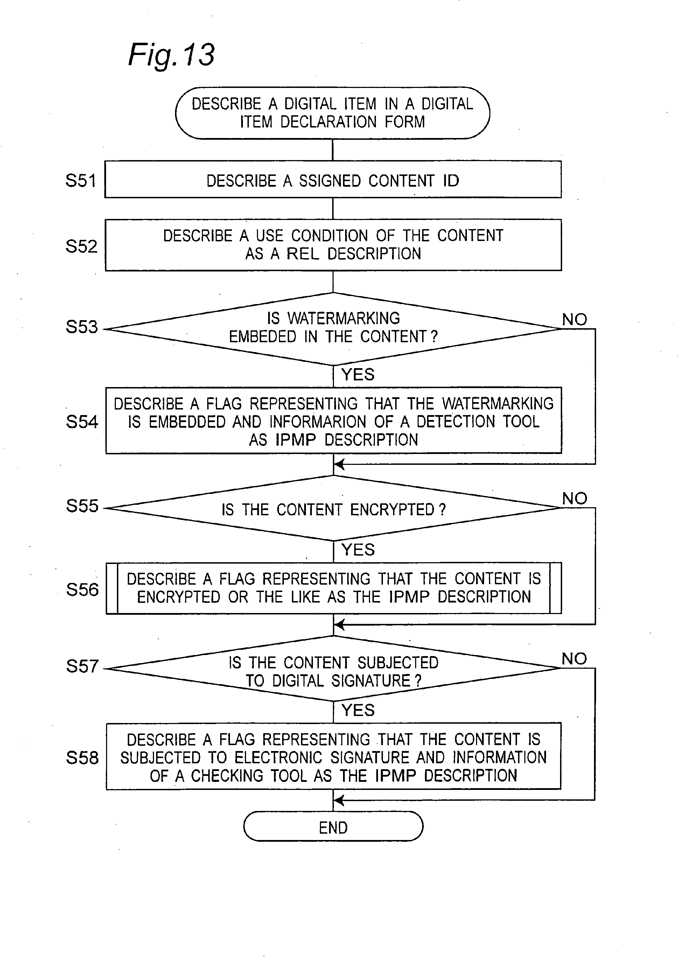

Fig. 13 shows another example of a flow chart showing details of a description step (indicated as step S5 in Fig. 4) when the digital item shown in Fig. 12 is formed. As shown in Fig. 13, the DID describer 26 of the content server 20 uses data of an ID received from the content ID assigner 23 to describe a content ID assigned to the digital item (step S51). The DID describer 26 uses data received from the use condition data generator 25 to describe a use condition of the content as a REL description (step S52). Then, the DID describer 26 uses data received from the content protecting processor 24 to determine whether a watermarking is embedded in the content (step S53). When the DID describer 26 determines that the watermarking is embedded (YES in step S53), the DID describer 26 describes a flag representing that the watermarking is embedded and information of a detection tool as an IPMP description (step S54). When the DID describer 26 determines that the watermarking is not embedded (NO in step S53), the flow shifts to the next step S55. The DID describer 26 uses the data received from the content protecting processor 24 to determine whether the content is encrypted (step S55). When the DID describer 26 determines that the content is encrypted (YES in step S55), it describes a flag or the like representing the content is encrypted as an IPMP description (step S56). When the DID describer 26 determines that the content is not encrypted (NO in step S55), the flow shifts to the next step S57. Then, the DID describer 26 uses the data received from the content protecting processor 24 to determine whether the content is subjected to digital signature (step S57). When the DID describer 26 determines that the content is subjected to digital signature (YES in step S57), it describes a flag representing that the content is subjected to electronic signature and information of a checking tool as the IPMP description (step S58). When the DID describer 26 determines that the content is not subjected to digital signature (NO in step S57), the process is ended. The process shown in step S56 in Fig. 13 is the same as the process explained by using Fig. 8.

The characteristic feature of the present invention in which both an IPMP description and a REL description related to certain content are given in a digital item having the content, and the IPMP description and the REL description are set in the same package to deliver the package to a terminal can also be applied to the following case.

Considering about the case that it is described in the REL description that certain content can be watched at a plurality of resolutions and it is described in the IPMP description about a decryption tool necessary when the content is decrypted for each resolution, when the IPMP description and the REL description related to one piece of content are given to different digital items, and therefore, the REL description and the IPMP description are independently interpreted on a reception side, all the decryption tools necessary when the content is watched for all of the resolutions are downloaded at once when the IPMP description is interpreted. In this case, even if a user desires to watch the content at one specific resolution, all the decryption tools are downloaded. For this reason, long time and large cost are disadvantageously required to transmit the unused decryption tools, and a memory for storing the unused decryption tools must be disadvantageously assured. In contrast to this, when both the IPMP description and the REL description are given in a digital item having the content, and the IPMP description and the REL description are delivered as the same package, only necessary decryption tools related to the resolution desired by a user can be downloaded. Thus, time and cost required to transmit the decryption tools can be minimized, and unnecessary tools need not be stored in a memory advantageously.

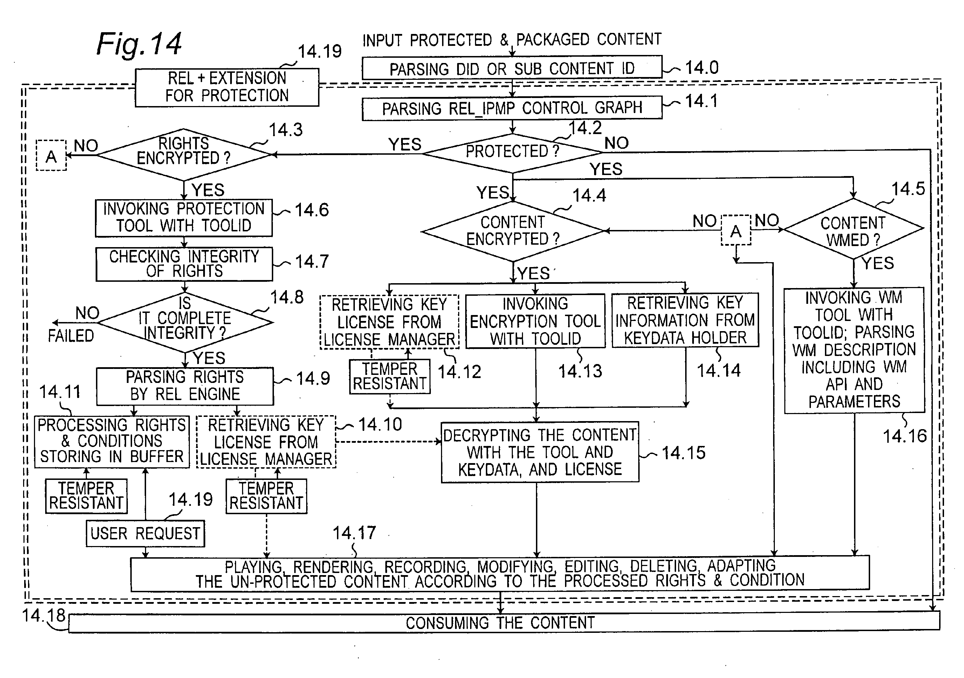

As shown in Fig. 14 which is based on Fig. 9, Module 14.19 is considered as REL + Extension to support content protection as well by the extended REL, and module 14.9 is the existing REL engine. Module 14.1 is changed into REL-IPMP Control Graph, and Module 14.0 is a separate DID parser in the case of MPEG-21.

Other modules are the same functions as explained in the above.

In Fig. 14 it is shown for the Terminal Processing Flow Chart to process protection & Packaging Information carried in REL-IPMP Control Graph before a protected content could be consumed in module 14.18.

Module 14.1 is to parse DID and REL-IPMP Control Graph information where DID parser is required only for the case REL-IPMP Control Graph is carried in DID in MPEG-21case.

In the case of content distribution over RTF network, REL-IPMP Control Graph can be retrieved from SDP to obtain rights and protection description information except the key information if it is time-variant.

Module 14.2 is to detect if the content is protected or free. If it is free, it will be able to play back by module 14.18 for consumption. Otherwise there are three branches to go and check in module 14.3, 14.4, and 14.5, respectively.

Module 14.3 is to detect if the Rights is encrypted, module 14.4 is to detect if the content is encrypted, and module 14.5 is to detect if the content is watermarked.

If the rights is protected, module 14.6 is to invoke the protection tool with ToolID and module 14.7 is to check the integrity of the rights using the tool. If the integrity is successfully verified in module 14.8, the rights will be sent to module 14.9 for parsing the rights by REL Engine which conforms to the existing REL standard.

Module 14.11 is to process the rights and conditions attached to the content and store the entitled rights and conditions in a buffer. In module 14.19 those rights requested by the users are subjected to checking against the rights and conditions stored in the buffer.

If there is license carried in Rights, module 14.10 is to retrieve license from License Manager which may be temper resistant (TR) protected.

If the content is protected and encrypted, module 14.13 is to invoke the encryption tool indicated by ToolID carried in REL-IPMP Control Graph, module 14.14 is to retrieve KeyInformation, and module 14.12 is to obtaining the key license from License Manager.

License Manager here could be protected by temper resistant technique if it is part of the terminal or somewhere in other places, since it will provide the actual license which the decryption engine will use to un-protect the content.

The encryption tool can be defined as default for most of the terminals to use in their implementation, while an IPMP ToolID is provided so that people can choose other than default encryption tool in their special domain or case. If the platform is allowed to download and use different encryption tool indicated by ToolID, it would achieve extensibility, flexibility and renewability at the same time we will achieve interoperability across different domains.

Key Information could be retrieved from different places in the case of content delivery via various networks. This will depend on where you place key information. If you place them in RTF header, you can get them there, while if you place them as other packets like video and audio data, you can get them by following the same rules applied to video and audio. The time-variant key information is required to obtain in the same time when you need to decrypt the video and audio content.

Module 14.15 is to decrypting the content with the invoked tool, KeyData, and License, then passed to module 14.17 for further processing.

If the content is detected as watermarked in module 14.5, the watermarking tool with ToolID and its description data including interface will be invoked and prepared in module 14.16 for action which is up to user's request.

Finally module 14.17 is to exercise the rights which user is requested based on the entitled rights & conditions, and act on the un-protected content which is the output of module 14.15

In Figure 14 Temper Resistant is used to protect the functioning of License Manager to provide license, Rights & Condition Processing to prepare the rights, even content decryption for obtaining un-protected content.

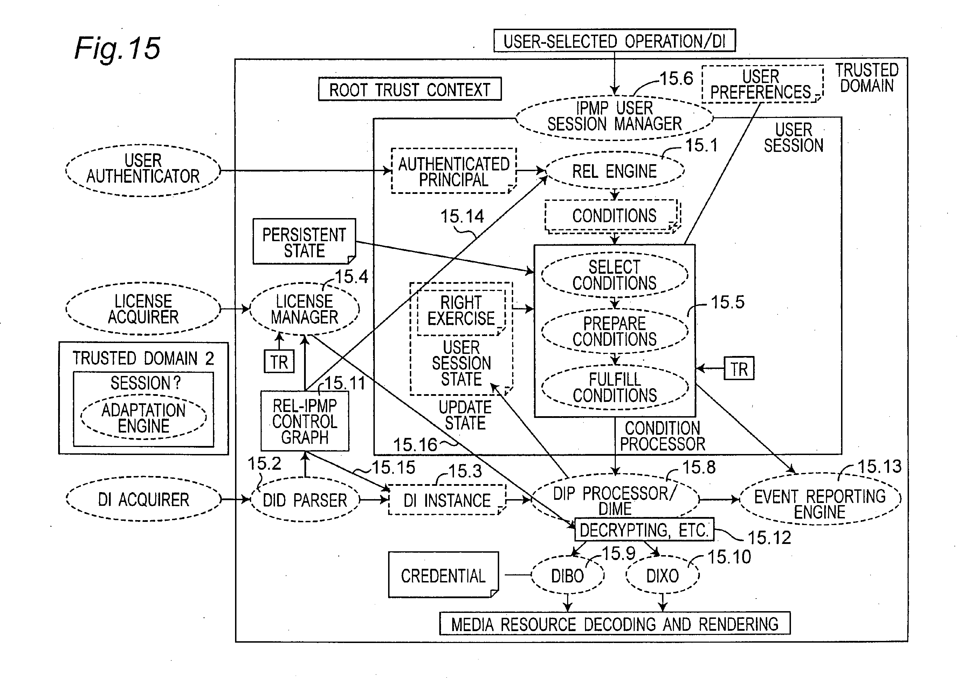

Figure 15 shows for a modified IPMP Architecture with REL-IPMP Control Graph processed. Compared to the Rights and Protection (IPMP Related) functions in Fig. 14 and Fig. 15, it is clear that there are many IPMP related functions missing in the prior art of Fig. 2. Only the blocks in blue color in Fig. 14 which are the module 14.9 for REL Engine, module 14.10 and 14.12 for License Manager, and module 14.11 for Conditions Processing, are introduced in the prior art as shown in Fig. 2. Such function blocks are module 2.1, module 2.4, and module 2.5 in Fig. 2.

As shown in Figure 15, Module 15.11 is added for parsing and processing EPMP Control Graph information, and the corresponding results are passed to License Manager in module 15.4, REL related data passed to REL Engine in module 15.1 after its integrity is checked, and content protection and watermarking information passed to DI iNstanace in module 15.3 for further processing.

Decrypting, watermarking, etc. in module 15.12, could be conducted in module 15.8 if such method is defined in DIME, or in module 15.9 if it is defined as one function of DIBO, or in module 15.10 if it is an external function.

The line 15.14 is shown for the data flow from REL-EPMP Control Graph processing module to REL Engine, and the line 15.15 is shown for the data flow from REL-IPMP Control Graph processing module to NI iNstance.

The line 15.16 is shown for the data flow from License Manager to the un-protecting block in the module 15.12 for issuing a license.

Module 15.13 is for Event Reporting Engine which is placed in the same trusted domain compared to that in Fig. 2.

TR means Temper Resistance module to be used to protect License Manager operation and Condition Processing Operation.

Other modules have the similar meaning as explained in Fig. 2.

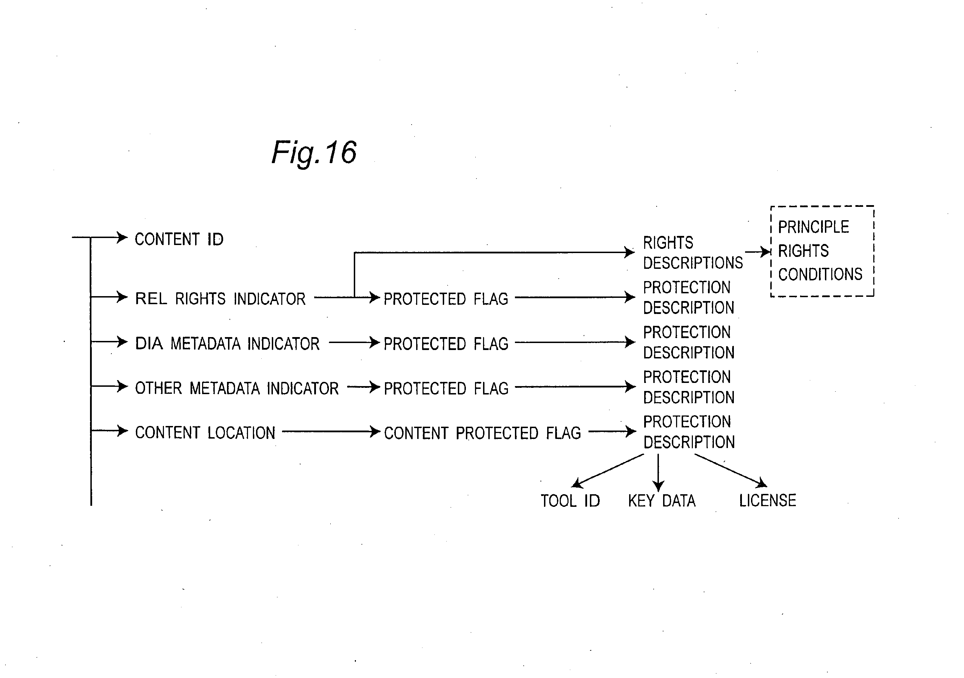

In Fig. 16, Layout of Rights and Protection in IPMP Control Graph or REL-IPMP Control Graph is shown, where the content ID, the protected object's indicator, the protection flags, and the detail rights and conditions as well as the detail protection descriptions are placed and carried in this holder.

The present invention has been described with respect to the specific embodiment. However, many other modifications, corrections, and other uses are apparent to persons skilled in the art. Therefore, the present invention is not limited to a specific disclosure and can be limited by only the accompanying claims of the invention.

## Claims

1. A method for delivering content comprising the steps of:
processing the content to protect copyright of the content;
deciding use conditions of the content;
describing a first digital item or a second digital item in which said first digital item is defined in a form of Digital Item Declaration, said first digital item containing the content or an address of the content and being able to contain other digital items defined therein;
packaging said first or second digital item described in the form of Digital Item Declaration; and
delivering said first or second digital item packaged in said packaging step to a user terminal;
wherein, in said describing step, a first description regarding processing the content to protect the copyright of the content and a second description regarding the use conditions are both described in said first digital item.

2. The method for delivering content according to claim 1, wherein said second description is described followed by said first description in said first digital item, so that said second description is analyzed ahead of said first description by the user terminal.

3. The method for delivering content according to claim 1 or 2, wherein said describing step comprises a step of describing a flag which indicates that the copyright of the content is protected, and information of a first protect canceling tool for canceling the protection of the copyright of the content.

4. The method for delivering content according to claim 3, wherein said processing step comprises at least one of a step of embedding digital watermarking in the content, a step of encrypting the content, and a step of making digital signature in the content, and
said description step comprises a step of describing, based on a type of processing the content to protect the copyright, at least one of a set of a flag which indicates that the digital watermarking is embedded in the content and information of a detection tool for detecting the digital watermarking, a set of a flag which indicates that the content is encrypted and information of a decryption tool for decrypting the content, and a set of a flag which indicates that the digital signature is made in the content and information of a checking tool for checking the digital signature, as said first description.

5. The method for delivering content according to claim 4, wherein said processing step comprises a step of encrypting the content with a use of an encryption key, and
said describing step comprises a step of describing a flag which indicates that the content is encrypted, the information of a decryption tool for decrypting the content, and information of the encryption key, as said first description.

6. The method for delivering content according to claim 5, wherein said processing step further comprises a step of encrypting the encryption key, and
said describing step further comprises a step of describing information of a license key for decrypting the encrypted encryption key.

7. The method for delivering content according to one of claims 1-6, further comprises the steps of:
processing said second description to protect copyright of said second description;
describing a flag which indicates that the copyright of said second description is protected, and information of a second protect canceling tool for canceling the protection of the copyright of said second description.

8. A content server comprising:
a content processor which processes content to protect copyright of the content;
a use condition generator which generates use conditions of the content;
a describer which describes a first digital item or a second digital item in which the first digital item is defined in a form of Digital Item Declaration, said first digital item containing the content or an address of the content and being able to contain other digital items defined therein;
a packaging unit which packages said first or second digital item described in the form of Digital Item Declaration; and
a deliverer which delivers said first or second digital item packaged by said packaging unit to a user terminal;
wherein said describer describes both of a first description regarding processing the content to protect the copyright of the content and a second description regarding the use conditions in said first digital item.

9. The content server according to claim 8, wherein said describer describes a flag which indicates that the copyright of the content is protected, and information of a first protect canceling tool for canceling the protection of the copyright of the content.

10. The content server according to claim 8 or 9, wherein said content processor processes said second description to protect copyright of said second description; and
said describer describes a flag which indicates that the copyright of said second description is protected, and information of a second protect canceling tool for canceling the protection of the copyright of said second description.
